# EUROPÄISCHE PATENTSCHRIFT

(11) **EP 1 419 104 B1**
(45) Veröffentlichungstag und Bekanntmachung des Hinweises auf die Patenterteilung: **18.05.2011**
(21) Anmeldenummer: 02796199.4
(22) Anmeldetag: 04.07.2002
(51) Int. Cl.: C01B 15/10

(54) **VERFAHREN ZUR HERSTELLUNG VON GRANULATFÖRMIGEM UMHÜLLTEN NATRIUMPERCARBONAT UND VERFAHRENSGEMÄSS ERHÄLTLICHES PRODUKT**
METHOD FOR PRODUCING GRANULAR COATED SODIUM PERCARBONATE AND PRODUCT OBTAINED ACCORDING TO SAID METHOD
PROCEDE POUR PRODUIRE DU PERCARBONATE DE SODIUM ENROBE SOUS FORME DE GRANULES ET PRODUIT AINSI REALISE

(30) Priorität: 21.08.2001 DE 10140838
(43) Veröffentlichungstag der Anmeldung: 19.05.2004
(73) Patentinhaber: Evonik Degussa GmbH, 45128 Essen (DE)
(72) Erfinder: JAKOB, Harald, 63594 Hasselroth (DE); HESSBERGER, Waldemar, 63755 Alzenau (DE); LATTICH, Jürgen, 61130 Nidderau (DE); OVERDICK, Ralph, 65719 Hofheim (DE)
(86) Internationale Anmeldenummer: PCT/EP2002/007408
(87) Internationale Veröffentlichungsnummer: WO 2003/018471

(56) Entgegenhaltungen:
- EP-A- 0 962 424
- EP-A- 0 970 917
- WO-A-95/06615
- WO-A-97/19890
- WO-A-99/06321
- US-A- 3 917 663
- US-A- 5 851 420

## Beschreibung

Die Erfindung betrifft ein Verfahren zur Herstellung von granulatförmigem umhüllten Natriumpercarbonat mit niedrigem TAM-Wert und verfahrensgemäß erhältliches Produkt, das sich durch einen niedrigen TAM-Wert (mikrokalorimetrische Bestimmung der Energiefreisetzung bei der Lagerung) auszeichnet. Das erfindungsgemäße Verfahren umfasst (i) die Herstellung von granulatförmigem Natriumpercarbonat durch Wirbelschichtsprügranulation, und (ii) eine Umhüllung des granulatförmigen Natriumpercarbonats mit einer Hüllkomponente in einer Wirbelschicht.

Zur Herstellung von Natriumpercarbonat der allgemeinen Formel 2 Na₂CO₃ - 3 H₂O₂, welches als Bleichkomponente in Wasch- und Reinigungsmitteln Anwendung findet, finden insbesondere Kristallisationsverfahren und Wirbelschichtsprühgranulationsverfahren in technischem Maßstab Anwendung.

Ein durch Kristallisationsverfahren erhaltenes Natriumpercarbonat lässt sich wegen seines oft niedrigen TAM-Wertes per se zwar gut lagern, die Aktivsauerstoffstabilität in Gegenwart von Waschmittelbestandteilen, wie insbesondere Zeolithen, ist jedoch aufgrund der porösen Oberfläche unbefriedigend. Zwar lässt sich die Lagerstabilität von durch ein Kristallisationsverfahren erzeugtem Natriumpercarbonat in Gegenwart von Waschmittelbestandteilen durch Umhüllen des Natriumpercarbonatkerns mit stabilisierend wirkenden Komponenten, verbessern, jedoch werden die heute an ein solches Produkt gestellten Anforderungen oft nicht mehr ausreichend erfüllt.

Bei den Wirbelschichtsprühgranulationsverfahren werden im wesentlichen kugelförmige dichte Natriumpercarbonatpartikel mit herstellungsbedingt schalenförmigem Aufbau und höherer Lagerstabilität als ein durch Kristallisation gewonnenes Produkt erhalten. Zur Durchführung des Verfahrens werden eine wässrige Wasserstoffperoxidlösung und eine wässrige Sodalösung oder gegebenenfalls auch Sodasuspension in eine Wirbelschicht gesprüht, welche Natriumpercarbonatpartikel enthält, deren Durchmesser kleiner ist als derjenige der herzustellenden Partikel. Während des Einsprühens der in wässrigem Medium befindlichen Reaktionspartner wird Wasser bei einer Wirbelschichttemperatur im Bereich von 40 bis 95 °C verdampft. Einzelheiten zur Ausführung des Wirbelschichtsprühgranulationsverfahrens können beispielhaft dem EP-Patent 0 716 640 (WO-A-95/06615) entnommen werden. Um die Aktivsauerstoffstabilität in Gegenwart von Waschmittelbestandteilen weiter zu erhöhen, kann auch durch Wirbelschichtsprühgranulation erzeugtes Natriumpercarbonat mit einer stabilisierenden Hüllschicht umhüllt werden, beispielsweise mit einer Natriumsulfatschicht gemäß EP-Patent 0 863 842 (= WO-A-97/19890).

Aus Gründen der Handhabungssicherheit von Natriumpercarbonat, insbesondere einer erhöhten Sicherheit bei der Lagerung in einem Silo, wird zunehmend Natriumpercarbonat mit einer weiter verbesserten Lagerfähigkeit, entsprechend einem gegenüber bisher weiter reduzierten TAM-Wert, verlangt. Der TAM-Wert von Natriumpercarbonat läst sich zwar in gewissem Umfang durch eine Umhüllung des Natriumpercarbonats mit einem inertisierenden Material erniedrigen, der damit erzielbare Effekt ist in vielen Fällen jedoch noch nicht ausreichend. Bei dem TAM-Wert handelt es sich um eine mikrokalorimetrische Bestimmung der Energiefreisetzung bei der Lagerung, bestimmt mittels TAM® Thermal Activity Monitor der Firma Termometric AB, Järfälla (SE).

Es wurden bereits verschiedene Anstrengungen unternommen, den TAM-Wert von Natriumpercarbonat bei der Herstellung durch Wirbelschichtsprühgranulation zu erniedrigen. Wie von den Erfindern der vorliegenden Anmeldung festgestellt wurde, weist ein gemäß DE-OS 27-33 935 hergestelltes Natriumpercarbonat, das durch Wirbelschichtsprühgranulation erzeugt wurde, einen relativ niedrigen TAM-Wert auf, wenn sowohl ein kondensiertes Phosphat als auch Magnesiumsülfat den zu versprühenden Lösungen zugesetzt wird. Nachteilig an diesem Verfahren ist die erforderliche hohe Einsatzmenge an diesen zugesetzten Stoffen.

Die noch nicht veröffentlichte DE-Patentanmeldung 100 48 514.6 lehrt ein weiteres Verfahren, zur Herstellung von Natriumpercarbonat mit niedrigem TAM-Wert, vorzugsweise um/unter 6 µW/g durch Wirbelschichtsprühgranulation, wobei zwecks Erniedrigung des TAM-Werts vorzugsweise eine Magnesiumverbindung in einer Menge von etwa 100 bis 1000 ppm Mg²⁺ und/oder ein ausgewählter Chelatkomplexbildender, wie eine Aminophosphonsäure in einer Menge von 200 bis 1000 ppm mindestens einer der zu versprühenden Lösungen zugesetzt wird. Wie bereits eingangs ausgeführt, muss auch ein Natriumpercarbonat mit niedrigem TAM-Wert in der Regel mit einer stabilisierenden Hülle umgeben werden, um in Wasch- und Reinigungsmitteln eine ausreichende Lagerstabilität des Aktivsauerstoffgehalts zu gewährleisten. Während der TAM-Wert ein Kriterium für die Sicherheit bei der Silolagerung darstellt, handelt es sich bei der Aktivsauerstoffstabilität um ein Kriterium, das insbesondere bei der Lagerung eines Natriumpercarbonat enthaltenden Waschmittels von Bedeutung ist.

Aufgabe der vorliegenden Erfindung ist es demgemäß ein Verfahren zur Herstellung von granulatförmigem umhüllten Natriumpercarbonat aufzuzeigen, das einen niedrigen TAM-Wert aufweist, insbesondere einen TAM-Wert um/unter 8 µW/g, vorzugsweise um/unter 5 µW/g. Das Verfahren sollte in möglichst einfacher Weise technisch realisiert werden könnens. Vorzugsweise sollen keine andersartigen Verfahrensschritte erforderlich sein, als sie ohnehin bei der bekannten Wirbelschichtsprühgranulation und Umhüllung in der Wirbelschicht angewandt werden.

Gelöst werden diese Aufgaben sowie weitere Aufgaben, die sich aus der weiteren Beschreibung ergeben, durch das erfindungsgemäße Verfahren. Gefunden wurde demgemäß ein Verfahren zur Herstellung von granulatförmigem umhüllten Natriumpercarbonat, umfassend (i) Herstellung von granulatförmigem Natriumpercarbonat durch Wirbelschichtsprügranulation, wobei eine wässrige Natriumcarbonatlösung oder -suspension und eine wässrige Wasserstoffperoxidlösung im Molverhältnis von Na₂CO₃ zu H₂O₂ im Bereich von 1 zu 1,4 bis 1 zu 1,8 in eine Natriumpercarbonatpartikel enthaltende Wirbelschicht eingesprüht werden und gleichzeitig Wasser verdampft wird, und (ii) Umhüllen des granulatförmigen Natriumpercarbonats durch Aufsprühen mindestens einer eine oder mehrere Hüllkomponenten enthaltenden wässrigen Lösung in einer Wirbelschicht bei gleichzeitigem Verdampfen von Wasser, dadurch gekennzeichnet, dass man a) die Wirbelschichtsprühgranulation bei einer Wirbelschichttemperatur T_{G} im Bereich von 45 bis 75 °C durchführt, das granulatförmige Natriumpercarbonat vor der Umhüllung bei einer Wirbelschichttemperatur T_{NT} im Bereich von 60 bis 100°C nachtrocknet, wobei T_{NT} größer als T_{G} ist und die Umhüllung bei einer Wirbelschichttemperatur T_{U} im Bereich von 35 bis 100 °C, oder dass man (b) die Wirbelschichtsprühgranulation mindestens zweistufig durchführt, wobei die Wirbelschichttemperatur T_{G1} im genannten Bereich für T_{G} und die Wirbelschichttemperatur T_{Gn} in der/den nachfolgenden Stufe(n) im Bereich für T_{NT} liegt, T_{GNT} größer als T_{G} ist und während der ersten Stufe mindestens zwei Drittel der Masse des Granulats gebildet worden sind, und das so erhaltene Natriumpercarbonatgranulat ohne oder nach einer Nachtrocknung bei einer Wirbelschicht-Temperatur im Bereich von T_{NT} T_{U} umhüllt oder dass man (c) das bei TG ohne Nachtrocknung hergestellte granulatförmige Natriumpercarbonat umhüllt und bei einer Wirbelschichttemperatur T_{UNT} nachtrocknet, wobei T_{UNT} mindestens 20 °C größer als T_{G} ist.

Die Unteransprüche richten sich auf bevorzugte Ausführungsformen des erfindungsgemäßen Verfahrens.

Ein weiterer Gegenstand der Erfindung betrifft granulatfömriges umhülltes Natriumpercarbonat mit einem Mg⁺²-Gehalt im Kern von 100 bis 1000 ppm und einer Umhüllung aus einer oder mehreren hydratbildenden Hüllkomponenten aus der Reihe Natriumsulfat, Soda, Natriumbicarbonat und Magnesiumsulfat, erhältlich durch ein erfindungsgemäßes Wirbelschichtsprühgranulationsverfahren, gekennzeichnet durch einen TAM-Wert von kleiner 3 µW/g, gemessen nach 48 h bei 40°C.

Gemäß dem eingangs gewürdigten EP-Patents 0 716 640 erfolgt die Wirbelschichtsprühgranulation bei einer Wirbelschichttemperatur im Bereich von 40 bis 95 °C und vorzugsweise 50 bis 70 °C. Dieses Dokument lehrt ferner, dass das Natriumpercarbonat-Wirbelschichtsprühgranulat mit einer Feuchte zwischen 2 und 10 Gew.-% aus der Wirbelschichtapparatur entnommen und nach Bedarf nachgetrocknet oder zwecks Stabilitätserhöhung einer Nachbehandlung zugeführt wird. Der Begriff "Nachtrocknung" wird so verstanden, dass während dieser Zeit keine Sprühlösung in die Wirbelschicht eingedüst wird. Eine Anregung, dass die Nachtrocknung bei höherer Temperatur erfolgen soll, lässt sich diesem Dokument nicht entnehmen. Eine Umhüllung von Natriumpercarbonat in einer Wirbelschicht ist eine solche "Nachbehandlung". Dieses Dokument gibt damit dem Fachmann keinen Hinweis, vor einer Umhüllung des Wirbelschichtsprühgranulats dieses nachzutrocknen, vielmehr würde er eine Trocknungsstufe an das Ende des Gesamtverfahrens legen, also die Trocknung nach dem Umhüllen des Granulats in einer Wirbelschicht vornehmen. Überraschenderweise wurde nun gefunden, dass sich der TAM-Wert von granulatförmigem umhüllten Natriumpercarbonat dadurch wesentlich erniedrigen lässt, dass vor der Umhüllung des durch Wirbelschichtsprühgranulation erhaltenen granulatförmigen Natriumpercarbonats bei erhöhter Temperatur nachgetrocknet wird. Durch eine zusätzliche Trocknung im Anschluß an die Umhüllung kann eine weitere Absenkung des TAM-Werts erzielt werden, wobei im Hinblick auf die geringe Schichtdicke der Umhüllung im allgemeinen ein sehr kurzzeitiges Trocknen ausreicht.

Die Granulationsstufe des erfindungsgemäßen Verfahrens lässt sich ein- oder mehrstufig durchführen. Bei einstufiger Verfahrensweise werden die Reaktanden unter Aufrechterhaltung einer Wirbelschichttemperatur T_{G} im Bereich von 45 bis 75 °C, vorzugsweise 55 bis 75 °C bei gleichzeitigem Verdampfen von Wasser in die Wirbelschicht eingedüst. Das Eindüsen kann mittels einer oder mehreren Sprühdüsen erfolgen. Besonders bevorzugt werden die Reaktanden unter Verwendung einer 3- oder 4-Stoff-Düse, beispielsweise gemäß EP 0 716 640 B1, bzw. EP 0 787 682 in den Wirbelschichtreaktor eingedüst. Zur Herstellung des granulatförmigen nicht-umhüllten Natriumpercarbonats eigenen sich übliche Wirbelschichtreaktoren mit oder ohne klassierenden Austrag des Granulats. Gemäß einer bevorzugten Ausführungsform handelt es sich bei dem Reaktor um eine Fließrinne, welche in mehrere Kammern unterteilt sein kann und an deren Seitenwänden die Düsen angeordnet sind.

Gemäß einer ersten Ausführungsform des erfindungsgemäßen Verfahrens bei welcher die Wirbelschichtsprühgranulation unter Aufrechterhaltung von im wesentlichen einer Wirbelschichttemperatur durchgeführt wird, schließt sich an die Granulionsstufe (i) eine Nachtrocknung bei einer Temperatur T_{NT}, welche größer als T_{G} ist, an, während welcher keine weiteren Reaktanden in Form einer wässrigen Lösung eingedüst werden. Während dieser Nachtrocknung sinkt der TAM-Wert ab. Vorzugsweise erfolgt die Nachtrocknung bei einer Wirbelschichttemperatur T_{NT} im Bereich von größer 75 bis 95°C, insbesondere 90 ± 5°C. Vorzugsweise ist T_{NT} um 10 bis 30 °C, insbesondere 20 bis 30 °C größer als T_{G}.

Eine derartige Nachtrocknung führt zu einer größeren Absenkung des TAM-Werts als eine alleinige Nachtrocknung des granulatförmigen umhüllten Natriumpercarbonats. Gemäß einer alternativen Ausführungsform des erfindurigsgemäßen Verfahrens erfolgt die Stufe (i) nicht bei im wesentlichen konstanter Temperatur T_{G}, sondern zwei- oder mehrstufig bei ansteigender Wirbelschichttemperatur T_{G1}, T_{G2} ... T_{Gn}, wobei T_{Gn} größer als T_{G1} ist. Zweckmäßigerweise beträgt die Temperaturdifferenz zwischen T_{G1} und T_{Gn} 10 bis 40 °C, insbesondere 20 bis 30 °C. Besonders bevorzugt erfolgt die Herstellung des Wirbelschichtsprühgranulats zweistufig bei einer Wirbelschichttemperatur T_{G1} von 70 ± 5 °C und einer Wirbelschichttemperatur T_{G2} (= T_{Gn}) von 90 ± 5 °C. Die zweite Stufe erfolgt, wenn mindestens die Hälfte des Granulataufbaus erfolgt ist. Zweckmäßigerweise werden mindestens 2/3 der Masse des Granulats innerhalb einer ersten Stufe und weniger als 1/3 der Masse in einer zweiten oder weiteren Stufen erzeugt. Es wurde festgestellt, dass bei dieser Ausführungsform der Aktivsauerstoffverlust geringer ist, als wenn von vorne herein der Granulataufbau bei einer höheren Wirbelschichttemperatur erfolgt. Gleichzeitig werden bei der erfindungsgemäßen Ausführungsform Granulate mit einem niedrigeren TAM-Wert erhalten. Das durch zwei- oder mehrstufige Wirbelschichtsprühgranulation erhaltene Granulat kann bei Bedarf auch bei einer Temperatur T_{NT} nachgetrocknet werden, wobei hier T_{NT} gleich oder größer ist als der letzten Temperaturstufe der Wirbelschichtsprühgranulation entspricht; bei zweistufiger Wirbelschichtsprühgranultion ist somit T_{NT} gleich oder größer als T_{G2} bzw. T_{Gn}

Die Dauer der Nachtrocknung bei einstufiger und bei bedarf auch mehrstufiger Sprühgranulation richtet sich nach dem gewünschten Restfeuchtegehalt sowie insbesondere der gewünschten Erniedrigung des TAM-Werts. Üblicherweise liegt die Nachtrocknungsdauer im Bereich von 1 bis 60 min, vorzugsweise im Bereich von 15 bis 45 min und besonders bevorzug um 30 min. Die optimale Nachtrocknungsdauer, welche auch von den Betriebsparametern des Wirbelschichtreaktors anhängt, lässt sich durch einige orientierende Vorversuche leicht ermitteln.

Das Umhüllen des Wirbelschichtsprühgranulats erfolgte üblicherweise bei einer Wirbelschichttemperatur T_{U} im Bereich von 35 bis 100 °C, insbesondere 40 bis 90 °_{C} und besonders bevorzugt bei 40 bis 70 °C. Das Umhüllen kann ein- oder mehrschichtig erfolgen, wobei jeweils eine ein oder mehrere Hüllkomponenten enthaltende wässrige Lösung auf das zuvor gebildete Natriumpercarbonat-Wirbelschichtgranulat bei gleichzeitigem Verdampfen des eingebrachten Wassers aufgesprüht wird. Bei den Hüllkomponenten handelt es sich um hydratbildende anorganische Salze, wie Magnesiumsulfat, Natriumsulfat, Soda und Natriumbicarbonat und Kombinationen von Salzen; geeignete Hüllkomponenten sind auch Borate und Chelatkomplexbildner. Gemäß einer bevorzugten Ausführungsform enthält das granulatförmige umhüllte Natriumpercarbonat bis zu 10 Gew.-% Hüllkomponente(n) vorzugsweise um 5 Gew.-%.

Sofern dies im Hinblick auf eine weitere Absenkung des TAM-Wertes erwünscht ist, ist es zweckmäßig, das umhüllte Wirbelschichtsprühgranulat bei einer Wirbelschichttemperatur T_{UNT} nachzutrocknen. Üblicherweise ist hierbei die Temperatur T_{UNT} gleich oder größer als T_{U} und größer als T_{G}. Da die Schichtdicke der Umhüllung im allgemeinen sehr gering ist, genügt es, das umhüllte Material nur wenige Minuten nachzutrocknen, beispielsweise 2 bis 10 min, wenn der Kern bereits erfindungsgemäß nachgetrocknet wurde. Wenn T_{U} bereits nennenswert, beispielsweise 10 bis 30 °C, größer als T_{G}, bzw. T_{Gn} ist, kann auf eine Nachtrocknung verzichtet werden.

Gemäß einer weiteren erfindungsgemäßen Ausführungsform schließt sich an die Herstellung des Granulats unmittelbar die Beschichtung desselben mit einem umhüllenden Material an, wobei die Wirbelschichttemperatur bei der Granulatherstellung T_{G} und bei der Umhüllung T_{U} ist. Bei dieser Ausführungsform wird das granulatförmige umhüllte Natriumpercarbonat bei einer solchen Wirbelschichttemperatur T_{UNT} nachgetrocknet, welche mindestens 10 °C, vorzugsweise 20 bis 30 °C höher ist als die Temperatur T_{G} bzw. T_{Gn}. Bei dieser Ausführungsform liegt die Nachtrocknungsdauer im allgemeinen bei 10 bis 60 min.

Die bei der Granulatherstellung verwendete Wasserstoffperoxidlösung, sowie die wässrige Sodalösung oder -suspension können übliche Stabilisatoren enthalten. Insbesondere enthält die Sodalösung bzw. -suspension Wasserglas und die wässrige Wasserstoffperoxidlösung ein Magnesiumsalz und ggf. weitere Stabilisatoren. Besonders bevorzugt enthält die wasserstoffperoxidlösung ein Magnesiumsalz in einer solchen Menge, dass das umhüllte Natiumpercarbonat 100 bis 1000 ppm Mg²⁺ enthält. Es wurde festgestellt, das durch die Zugabe eines Magnesiumsalzes der TAM-Wert nennenswert erniedrigt werden kann - siehe DE-Patentanmeldung 100 48 514.6.

Durch das erfindungsgemäße Verfahren ist es möglich, granulatfömiges umhülltes Natriumpercarbonat mit sehr niedrigem TAM-Wert zu erhalten. Wie aus den Beispielen hervorgeht, ist es auch möglich, umhülltes Natriumpercarbonat mit einem TAM-Wert unter 3 µW/g zur Verfügung zu stellen. Derartig niedrige TAM-Werte waren nach den vorbekannte Verfahren nicht erhältlich.

Das erfindungsgemäße Verfahren sowie die dabei restultierenden Produkte werden anhand der nachfolgenden Beispiele erläutert.

### Beispiele

Allgemeine Beschreibung der Wirbelschichtsprühgranulation und Umhüllung sowie Trocknung.

Die Wirbelschichtsprühgranulation (Stufe i) wurde entsprechend EP 0 716 640 B1 in einem Laborwirbelschichtgranulator durchgeführt. Die Reaktanden, also die Sodalösung und die Wasserstoffperoxidlösung wurden mittels einer Dreistoffzerstäuberdüse in eine Startwirbelschicht aus Sodakernen (anstelle Natriumpercarbonat) mit geringem Korndurchmesser eingesprüht. Erhitzte Fluidisierungsluft (ca. 200 °C) wurde über einen Ventilator angesaugt (ca. 160 Nm³/h). Es wurde solange eingesprüht, bis ein mittlerer Korndurchmesser von 500 µm erreicht war. Der Sodaanteil aus der Startwirbelschicht im Wirbelschichtsprühgranulat betrug weniger als 10 %. Die Produktmenge in der Wirbelschicht wurde während des Versuchs durch periodische Teilentnahme etwa konstant auf 5 kg gehalten. Der Durchsatz der Edukte entsprach 5 kg Natriumpercarbonat. Soda wurde in der Form einer 30 gew.-%igen wässrigen Lösung mit Wasserglas als Stabilisator eingesetzt, Wasserstoffperoxid in Form einer 43,5 Gew.-%igen wässrigen Lösung. Soweit Mg²⁺ als Stabilisator eingesetzt wurde, erfolge die Zugabe als MgSO₄ · 7H₂O zur H₂O₂-Lösung. Das Molverhältnis Soda zu H₂O₂ wurde auf 1:1,58 eingestellt.

Soweit das Granulat vor der Umhüllung nachgetrocknet wurde, erfolgt die Trocknung im Wirbelschichtgranulator.

Nachdem bei der Wirbelschichtsprühgranulation die Zielkorngröße erreicht war, wurde ohne oder nach der Nachtrocknung in einem weiteren Wirbelschichtsprühraktor mit 5 % Natriumsulfat umhüllt und soweit angegeben nachgetrocknet.

Die Wirbelschichttemperaturen, Aktivsauerstoffgehalte Oₐ, TAM-Werte (bestimmt bei 40 °C und 48 h) und Besonderheiten sind der nachfolgenden Tabelle 1 zu entnehmen. T_{G} steht für die Wirbelschichttemperatur bei der Granulatbildung, T_{U} für jene bei der Umhüllung, T_{NT} für jene bei der Nachtrocknung des Granulats vor der Umhüllung, T_{Gn} für jene der zweiten Granulationsstufe, T_{UNT} für jene bei der Nachtrocknung des umhüllten Granulats.

**Tabelle 1**

| Beispiel-Nr. | Wirbelschichttemperatur °C | | | | Oa (%) | TAM (µW/g) | Bemerkungen |
|---|---|---|---|---|---|---|---|
| | T_{G} ¹⁾ | T_{NT} ²⁾ | T_{U} ^{*)} | T_{UNT} ³⁾ | | | |
| 1 | 68 - 70 | - | 70 ⇒ 60 | 68 - 70 | 13,1 | 11,3 | n.e. |
| 2 | 88 - 90 | - | 70 ⇒ 60 | 68 - 70 | 12,5 | 6,8 | n.e. |
| 3 | 68 - 70 | 88 - 90 | 70 ⇒ 60 | - | 12,8 | 6,4 | e. |
| 4 | 68 - 70 | 88 - 90 | 70 ⇒ 60 | 88 - 90 | 12,8 | 4,8 | e. |
| 5 | 68 - 70 | - | 70 ⇒ 60 | 68 - 70 | 13,1 | 5,1 | n.e.; Mg-stab. |
| 6 | 68 - 70 | - | 70 ⇒ 60 | 88 - 90 | 13,1 | 3,6 | e.; Mg-stab |
| 7 | 68 - 70 | 88 - 90 | 70 ⇒ 60 | - | 12,8 | 3,6 | e.; Mg-stab |
| 8 | | 88 - 90 | 70 ⇒ 60 | 88 - 90 | 12,8 | 2,9 | e.; Mg-stab |

| | | | | | | | |
|---|---|---|---|---|---|---|---|
| 1) Granulationsdauer: ca. 3 h 2) Nachtrocknungsdauer des Granulats: ca. 0,5 h 3) Nachtrocknungsdauer des umhüllten Granulats: 0,5 h e. erfinderisch n.e. nicht erfinderisch Mg-stab. stabilisiert mit 1000 ppm Mg²⁺ *) Starttemperatur 70 °C / Temperatur beim Umhüllen ca. 60 °C | | | | | | | |

Die nicht erfinderischen Beispiele 1 und 2 zeigen, dass durch Erhöhung der Wirbelschichtemperatur T_{G} zwar der TAM-Wert erniedrigt wird, gleichzeitig kommt es aber zu einem nennenswerten Abfall des Aktivsauerstoffgehalts Oa. Der Oa-Abfall lässt sich wie aus dem Vergleich mit den Beispielen 3 und 4 folgt, bei erfindungsgemäßer Ausführung in engeren Grenzen halten; zusätzlich wird der TAM-Wert weiter erniedrigt, wenn das Granulat vor dem Umhüllen nachgetrocknet wird, wobei T_{NT} größer als T_{G} ist - siehe Beispiel 3. Eine weitere Senkung des TAM-Wertes wird durch eine zusätzliche Nachtrocknung des umhüllten Granulats erzielt, wenn T_{UNT} größer T_{U} ist - siehe Beispiel 4. Durch die Stabilisierung des Kerns des Natriumpercarbonatgranulats mit Magnesium wird der TAM-Wert weiter abgesenkt - siehe Beispiele 5 bis 8. Auch hier kommt es zu einer weiteren Absenkung des TAM-Wertes, wenn nach der Granulatbildung, also vor der Umhüllung, und/oder nach dem Umhüllen bei höherer Temperatur nachgetrocknet wird - T_{NT} und T_{UNT} sind größer als T_{G} und T_{U}.

### Beispiel 9

Hier wurde die Granulation zweistufig durchgeführt, wobei 5/6 der Granulatbildung bei T_{G} und 1/6 bei T_{GNT} erfolgten, wobei T_{GNT} größer T_{G} war. Durch diese Temperaturerhöhung wird ein Nachtrocknungseffekt bei gleichzeitigem Weiterwaschen des Granulatskorns erzielt, wobei der TAM-Wert ohne großen Aktivsauerstoffverlust abgesenkt wird. Eine weitere Nachtrocknung bei T_{NT}, wobei T_{NT} > T_{G} ist, führte zu einer weiteren Erniedrigung des TAM-Werts. Tabelle 2 zeigt die Ergebnisse. Die Produkte gemäß 9.2 und 9.3 wurden in bekannter Weise mit 5 % Na₂SO₄ umhüllt, die Anfgaben in der Tabelle 2 beziehen sich aber auf nichtumhülltes, nicht Mg-stabilisiertes Granulat.

| Beispiel-Nr. | Granulationsdauer (Min) | Wirbelschicht-temperatur (°C) | | | Oa (%) | TAM (µW/g) |
|---|---|---|---|---|---|---|
| | | T_{G} | T_{GNT} | T_{NT} | | |
| 9.1 | 150 | 70 | - | - | 13,5 | 9,1 |
| 9.2 | 30 | - | 90 | - | 13,6 | 6,2 |
| 9.3 | 30 | - | - | 90 | 13,4 | 5,1 |

## Patentansprüche

1. Verfahren zur Herstellung von granulatförmigem umhüllten Natriumpercarbonat, umfassend (i) Herstellung von granulatförmigem Natriumpercarbonat durch Wirbelschichtsprügranulation, wobei eine wässrige Natriumcarbonatlösung oder -suspension und eine wässrige Wasserstoffperoxidlösung im Molverhältnis von Na₂CO₃ zu H₂O₂ im Bereich von 1 zu 1,4 bis 1 zu 1,8 in eine Natriumpercarbonatpartikel enthaltende Wirbelschicht eingesprüht werden und gleichzeitig Wasser verdampft wird, und (ii) Umhüllen des granulatförmigen Natriumpercarbonats durch Aufsprühen mindestens einer eine oder mehrere Hüllkomponenten enthaltenden wässrigen Lösung in einer Wirbelschicht bei gleichzeitigem Verdampfen von Wasser, **dadurch gekennzeichnet, dass** man
(a) die Wirbelschichtsprühgranulation bei einer Wirbelschichttemperatur T_{G} im Bereich von 45 bis 75 °C durchführt, das granulatförmige Natriumpercarbonat vor der Umhüllung bei einer Wirbelschichttemperatur T_{NT} im Bereich von 60 bis 100°C nachtrocknet, wobei T_{NT} größer als T_{G} ist und die Umhüllung bei einer Wirbelschichttemperatur T_{U} im Bereich von 35 bis 100 °C durchführt, oder dass man
(b) die Wirbelschichtsprühgranulation mindestens zweistufig durchführt, wobei die Wirbelschichttemperatur T_{G1} im genannten Bereich für T_{G} und die Wirbelschichttemperatur T_{Gn} in der/den nachfolgenden Stufe(n) im Bereich für T_{NT} liegt, T_{Gn} größer als T_{G} ist und während der ersten Stufe mindestens zwei Drittel der Masse des Granulats gebildet worden sind, und das so erhaltene Natriumpercarbonatgranulat ohne oder nach einer Nachtrocknung bei einer Wirbelschichttemperatur im Bereich von T_{U} umhüllt, oder dass man
(c) das bei T_{G} hergestellte granulatförmige Natriumpercarbonat ohne Nachtrocknung bei T_{U} umhüllt und bei einer Wirbelschichttemperatur T_{UNT} nachtrocknet, wobei T_{UNT} mindestens 10 °C größer als T_{G} ist.

2. Verfahren nach Anspruch 1,
**dadurch gekennzeichnet,**
**dass** man die Granulation bei einer Wirbelschichttemperatur T_{G} im Bereich von 55 bis 75°C und die Nachtrocknung bei einer Wirbelschichttemperatur T_{NT} im Bereich von größer 75 bis 95 °C durchführt.

3. Verfahren nach Anspruch 1 oder 2,
**dadurch gekennzeichnet,**
**dass** man die Nachtrocknung bei einer Verweildauer des Granulats in der Wirbelschicht im Bereich von 15 bis 45 Minuten durchgeführt.

4. Verfahren nach einem der Ansprüche 1 bis 3,
**dadurch gekennzeichnet,**
**dass** man das umhüllte granulatförmige Produkt aus der Stufe (ii) bei einer Wirbelschichttemperatur T_{UNT} im Bereich von 75 bis 95 °C nachtrocknet.

5. Verfahren nach einem der Ansprüche 1 bis 4,
**dadurch gekennzeichnet,**
**dass** man zur Herstellung des Natriumpercarbonatgranulats Na₂CO₃ und H₂O₂ in einem Molverhältnis im Bereich von 1 zu 1,5 bis 1 zu 1,6 einsetzt.

6. Verfahren nach einem der Ansprüche 1 bis 5,
**dadurch gekennzeichnet,**
**dass** man die Wirbelschichtspühgranulation und Nachtrocknung des nicht-umhüllten Natriumpercarbonatgranulats in einer in mehrere Kammern unterteilten Fließrinne durchführt und die Umhüllung sowie, soweit erforderlich, die Nachtrocknung des umhüllten granulatförmigen Natriumpecarbonats in einer oder mehreren nachgeschalteten Kammern der Fließrinne oder in einem der Fließrinne nachgeschalteten separaten Wirbelschichtreaktor durchführt.

7. Verfahren nach einem der Ansprüche 1 bis 6,
**dadurch gekennzeichnet,**
**dass** man das nachgetrocknete granulatförmige Natriumpercarbonat mit einem Natriumsulfat enthaltenden Hüllmaterial ein- oder mehrschichtig umhüllt, wobei die äußerste Hüllschicht als Hauptkomponente Natriumsulfat enthält und die gesamte Hüllmenge weniger als 10 Gew.-%, bezogen auf das umhüllte Natriumpercarbonat, beträgt.

8. Granulatförmiges umhülltes Natriumpercarbonat mit einem Mg⁺²-Gehalt im Kern von 100 bis 1000 ppm und einer Umhüllung aus einer oder mehreren hydratbildenden Hüllkomponenten aus der Reihe Natriumsulfat, Soda, Natriumbicarbonat und Magnesiumsulfat, erhältlich durch ein Wirbelschichtsprühgranulationsverfahren gemäß einem der Ansprüche 1 bis 7,
**gekennzeichnet durch**
einen TAM-Wert von kleiner 3 µW/g, gemessen nach 48 h bei 40°C.

## Claims

1. Process for preparing granular coated sodium percarbonate, comprising (i) preparing granular sodium percarbonate by fluidized bed spray granulation, where an aqueous solution or suspension of sodium carbonate and an aqueous solution of hydrogen peroxide are sprayed, in a molar ratio of Na₂CO₃ to H₂O₂ in the range from 1:1.4 to 1:1.8, into a fluidized bed containing sodium percarbonate particles, and at the same time water is evaporated, and (ii) coating the granular sodium percarbonate by spray application of at least one aqueous solution comprising one or more coating components, in a fluidized bed, with simultaneous evaporation of water, **characterized in that**
(a) the fluidized bed spray granulation is carried out at a fluidized bed temperature T_{G} in the range from 45 to 75°C, the granular sodium percarbonate is further dried at a fluidized bed temperature T_{NT} in the range from 60 to 100°C, where T_{NT} is greater than T_{G}, prior to coating and the coating is carried out at a fluidized bed temperature T_{U} in the range from 35 to 100°C, or **in that**
(b) the fluidized bed spray granulation is carried out in at least two stages, the fluidized bed temperature T_{G1} lying in the stated range for T_{G}, and the fluidized bed temperature T_{Gn} in the subsequent stage or stages lying in the range for T_{NT}, T_{Gn} being greater than T_{G}, and at least two thirds of the mass of the granules having been formed during the first stage, and the resulting sodium percarbonate granules are coated at a fluidized bed temperature in the range of T_{U} without further drying or following further drying, or **in that**
(c) the granular sodium percarbonate prepared at T_{G} is coated without further drying at T_{U} and is further dried at a fluidized bed temperature T_{UNT}, T_{UNT} being at least 10°C greater than T_{G}.

2. Process according to Claim 1, **characterized in that** the granulation is carried out at a fluidized bed temperature T_{G} in the range from 55 to 75°C and the further drying is carried out at a fluidized bed temperature T_{NT} in the range from greater than 75 to 95°C.

3. Process according to Claim 1 or 2, **characterized in that** the further drying is carried out with a residence time of the granules in the fluidized bed in the range from 15 to 45 minutes.

4. Process according to any of Claims 1 to 3, **characterized in that** the coated granular product from stage (ii) is further dried at a fluidized bed temperature T_{UNT} in the range from 75 to 95°C.

5. Process according to any of Claims 1 to 4, **characterized in that** the sodium percarbonate granules are prepared using Na₂CO₃ and H₂O₂ in a molar ratio in the range from 1:1.5 to 1:1.6.

6. Process according to any of Claims 1 to 5, **characterized in that** the fluidized bed spray granulation and further drying of the uncoated sodium percarbonate granules are carried out in a flow channel subdivided into a plurality of chambers, and the coating and, where necessary, the further drying of the coated granular sodium percarbonate are carried out in one or more downstream chambers of the flow channel or in a separate fluidized bed reactor downstream of the flow channel.

7. Process according to any of Claims 1 to 6, **characterized in that** the further dried granular sodium percarbonate is coated with one or more layers of a coating material comprising sodium sulphate, the outermost layer comprising sodium sulphate as main component, and the total amount of coating being less than 10% by weight, based on the coated sodium percarbonate.

8. Granular coated sodium percarbonate having an Mg⁺² content in the core of 100 to 1000 ppm and a coating of one or more hydrate-forming coating components from the group consisting of sodium sulphate, sodium carbonate, sodium bicarbonate and magnesium sulphate, obtainable by a fluidized bed spray granulation process according to any of Claims 1 to 7, **characterized by** a TAM value of less than 3 µW/g, measured after 48 h at 40°C.

## Revendications

1. Procédé de préparation de percarbonate de sodium sous forme de granulat enrobé, comprenant (i) la préparation de percarbonate de sodium sous forme de granulat par granulation par pulvérisation en lit fluidisé, une solution ou une suspension aqueuse de carbonate de sodium et une solution aqueuse de peroxyde d'hydrogène dans un rapport molaire de Na₂CO₃ à H₂O₂ dans la plage de 1:1,4 à 1:1,8 étant pulvérisées dans une lit fluidisé contenant des particules de percarbonate de sodium, et l'eau étant évaporée simultanément, et (ii) l'enrobage du percarbonate de sodium sous forme de granulat par pulvérisation d'au moins une solution aqueuse contenant un ou plusieurs composants d'enrobage dans une lit fluidisé avec évaporation simultanée d'eau, **caractérisé en ce que**
(a) on réalise la granulation par pulvérisation en lit fluidisé à une température du lit fluidisé T_{G} dans la plage de 45 à 75°C, on post-sèche le percarbonate de sodium sous forme de granulat avant l'enrobage à une température du lit fluidisé T_{NT} dans la plage de 60 à 100°C, T_{NT} étant supérieur à T_{G} et on réalise l'enrobage à une température du lit fluidisé T_{U} dans la plage de 35 à 100°C, ou **en ce que**
(b) on réalise la granulation par pulvérisation en lit fluidisé au moins en deux étapes, ou la température du lit fluidisé T_{G1} se situe dans la plage mentionnée pour T_{G} et la température du lit fluidisé T_{Gn} dans les/les étapes suivantes se situe dans la plage pour T_{NT}, T_{Gn} étant supérieure à T_{G} et pendant la première étape, au moins deux tiers de la masse du granulat ont été formés, et on enrobe le granulat de percarbonate de sodium ainsi obtenu sans post-séchage ou après un post-séchage à une température du lit fluidisé dans la plage de T_{U}, ou en ce que
(c) on enrobe le percarbonate de sodium sous forme de granulat préparé à T_{G} sans post-séchage à T_{U} et on post-sèche à une température du lit fluidisé T_{UNT}, où T_{UNT} est supérieure d'au moins 10 °C à T_{G}.

2. Procédé selon la revendication 1, **caractérisé en ce qu'**on réalise la granulation à une température du lit fluidisé T_{G} dans la plage de 55 à 75°C et le post-séchage à une température du lit fluidisé T_{NT} dans la plage supérieure à 75 jusqu'à 95°C.

3. Procédé selon la revendication 1 ou 2, **caractérisé en ce qu'**on réalise le post-séchage à une durée de séjour du granulat dans le lit fluidisé dans la plage de 15 à 45 minutes.

4. Procédé selon l'une quelconque des revendications 1 à 3, **caractérisé en ce qu'**on post-sèche le produit sous forme de granulat, enrobé de l'étape (ii) à une température du lit fluidisé T_{UNT} dans la plage de 75 à 95°C.

5. Procédé selon l'une quelconque des revendications 1 à 4, **caractérisé en ce qu'**on utilise, pour la préparation du granulat de percarbonate de sodium du Na₂CO₃ et du H₂O₂ dans un rapport molaire de 1:1,5 à 1:1,6.

6. Procédé selon l'une quelconque des revendications 1 à 5, **caractérisé en ce qu'**on réalise la granulation par pulvérisation en lit fluidisé et le post-séchage du granulat de percarbonate de sodium non enrobé dans un chenal d'écoulement divisé en plusieurs chambres et on réalise l'enrobage ainsi que, si nécessaire, le post-séchage du percarbonate de sodium sous forme de granulat enrobé dans une ou plusieurs chambres disposées les unes derrières les autres du chenal d'écoulement ou dans un réacteur à lit fluidisé séparé disposé en aval du chenal d'écoulement.

7. Procédé selon l'une quelconque des revendications 1 à 6, **caractérisé en ce qu'**on enrobe le percarbonate de sodium sous forme de granulat post-séché avec un matériau d'enrobage contenant du sulfate de sodium par une ou plusieurs couches, la couche d'enrobage extérieure contenant, comme composant principal, du sulfate de sodium et la quantité totale de l'enrobage représentant moins de 10% en poids, par rapport au percarbonate de sodium enrobé.

8. Percarbonate de sodium enrobé sous forme de granulat, présentant une teneur en Mg⁺² dans le noyau de 100 à 1000 ppm et un enrobage constitué par un ou plusieurs composants d'enrobage formant un hydrate de la série formée par le sulfate de sodium, le carbonate de soude, le bicarbonate de sodium et le sulfate de magnésium, pouvant être obtenu par un procédé de granulation par pulvérisation en lit fluidisé selon l'une quelconque des revendications 1 à 7, **caractérisé par** une valeur TAM (Thermal Activity Monitor) inférieure à 3 µW/g, mesurée après 48 h à 40°C.
